(19) Europäisches Patentamt
European Patent Office
Office européen des brevets

(11) **EP 2 224 578 A1**

(12) **EUROPEAN PATENT APPLICATION**

(43) Date of publication:
**01.09.2010 Bulletin 2010/35**

(51) Int Cl.:
***H02K 3/28*** (2006.01)

(21) Application number: **09153981.7**

(22) Date of filing: **27.02.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **ABB Research Ltd.**
**8050 Zürich (CH)**

(72) Inventor: **Chin, Robert**
**722 46 Västerås (SE)**

(74) Representative: **Kock, Ina**
**ABB AB**
**Intellectual Property**
**Ingenjör Bååths Gata 11**
**721 83 Västerås (SE)**

(54) **Stator winding scheme of a permanent magnet machine**

(57) The invention relates to a method for providing an improved winding factor ($k_{w1}$) of an 1-phase (A,B,C) permanent magnet machine (1) having concentrated windings. The permanent magnet machine (1) comprises a stator (4) having a plurality of stator teeth separated by a plurality of stator slots, and a rotor (2) provided with a plurality of permanent magnets constituting magnetic poles. The method comprises the steps of: choosing a slot/pole combination for the permanent magnet machine (1), providing a number of slots per pole per phase, and calculating a ratio k of an intermediate tooth span ($\theta_{inter}$) over a coil span ($\theta_{coil}$) based on the chosen number of slots per pole per phase, where the coil span ($\theta_{coil}$) comprises a coil span between coils of each respective phase, and the intermediate tooth span ($\theta_{inter}$) comprises a span between coils of two adjacent phases or between two consecutive winding sequences, the intermediate tooth span ($\theta_{inter}$) differing from the coil span ($\theta_{coil}$). The invention also relates to a corresponding permanent magnet machine (1).

Fig. 9

EP 2 224 578 A1

**Description**

**Field of the invention**

The invention is related to the field of permanent magnet machines, in particular motors/generators, and more specifically to permanent magnet machines with concentrated winding technology.

**Background of the invention**

Permanent magnet (PM) machines, in the following exemplified by PM motors, are used within a variety of technological fields. For low-speed and high torque applications the use of PM motors is an attractive alternative. The use of a gearbox can be eliminated, which in turn reduces the costs and increases the efficiency. Such direct-driven PM motors are for example used in industrial applications such as pulp and paper production, plastic extrusion, conveyor belts and wind power generation.

The PM motors may have a distributed winding topology or a concentrated winding topology, both having their advantages and disadvantages. In the concentrated winding topology, the windings are concentrated (or wound) around one single stator tooth in radial flux electrical machines. Such winding configuration offers a large reduction of copper material compared to the distributed winding topology, wherein the windings are wound in laps along the circumference of the stator of the PM motor. The winding overhang of the distributed winding topology produces unnecessary copper-losses and extends the stator axial dimension, which reduces torque density. The concentrated winding topology thus provides the advantages of reduced total active volume and weight of the PM motor. The use of less winding material also offers a favourable reduction in copper loss and hence a high torque density motor design can be obtained.

The flux linkage between the rotor and the windings, or winding factor, is an important design aspect. The maximum average torque output is directly proportional to the winding factor, a higher winding factor implying a higher output torque for a motor with a given frame size.

The distributed winding topology provides a winding factor equal to or nearly equal to the ideal value of one. Concentrated winding topology on the other hand, has a lower winding factor compared to the distributed winding topology, typically lying within the range of 0,93-0,96.

From the foregoing, the desire to improve the winding factor of the concentrated winding technology is readily understood.

**Summary of the invention**

It is an object of the invention to provide a method for optimizing the winding factor of a permanent magnet machine with concentrated windings, and a corresponding permanent magnet machine having an improved winding factor, thereby providing an increased torque or power output to such a permanent magnet machine.

It is another object of the invention to provide a permanent magnet machine with concentrated windings with a design that provides an increased average output torque or power for a given dimension or volume of the permanent magnet machine.

These objects, among others, are achieved by a method for optimizing coil span so as to provide an optimized winding factor of a permanent magnet machine with concentrated windings, and by a permanent magnet machine as claimed in the independent claims.

In accordance with the invention, a method is provided for improving a winding factor ($k_{w1}$) of an 1-phase permanent magnet machine having concentrated windings. The permanent magnet machine comprises a stator having a plurality of stator teeth separated by a plurality of stator slots. The permanent magnet machine further comprises a rotor provided with a plurality of permanent magnets constituting magnetic poles. The method is characterized by the steps of: choosing a slot/pole combination for the permanent magnet machine, providing a number of slots per pole per phase, and calculating a ratio k of an intermediate tooth span over a coil span based on the chosen number of slots per pole per phase, where the coil span comprises a coil span between coils of each respective phase, and the intermediate tooth span comprises a span between coils of two adjacent phases or between two consecutive winding sequences, the intermediate tooth span differing from the coil span. By fulfilling these design criteria the coil span design is optimized so as to provide an optimized winding factor. For a specific chosen slot-pole combination, the invention provides an huge advantage in that the average output torque or power can be increased for the same given dimensions or volume of the permanent magnet machine. The invention provides a designer of a low-speed high torque permanent magnet machine with an excellent and easily usable tool for optimizing the winding factor for a given slot-pole combination.

In accordance with an embodiment of the invention, the permanent magnet machine comprises three phases, and the step of choosing a slot/pole combination further comprises defining a fractional number n/d = q, where

$$n = \left\lceil \frac{Q_s/3}{GCD(Q_s/3; p)} \right\rceil \quad \text{and} \quad d = \left\lceil \frac{p}{GCD(Q_s/3; p)} \right\rceil ,$$ $Q_s$ is the number of stator slots and p is the number of poles. This enables the use of simple equations for optimizing the coil span.

In accordance with another embodiment, the intermediate tooth span comprises a span between two adjacent phases and the step of calculating the ratio k comprises utilizing the equation:

$$k = \left( \frac{d}{3} - n \right).$$

In accordance with still another embodiment, the intermediate tooth span comprises a span between two consecutive winding sequences and the step of calculating the ratio k comprises utilizing the equation:

$$k = (d - 3n).$$

By means of theses features, easily calculated and implemented general rules of thumbs are provided for identifying optimal design parameters for ultimately optimizing the winding factor.

The invention also provides a permanent magnet machine having a design fulfilling the criterion of the method.

Further features and advantages thereof will become clear upon reading the following detailed description of embodiments of the invention.

**Brief description of the drawings**

Figure 1 illustrates a PM motor having a concentrated winding configuration.

Figures 2a-2c illustrate exemplary designs for number of slots per pole per phase equal to 0.3.

Figures 3a-3b illustrate star of plots for a constant slot-pitch design and an irregular slot pitch having intermediate teeth between adjacent phases, respectively.

Figures 4a-4b illustrate star of plots showing stator voltage phasor elements for designs with a q = 0.25 with x number of repeating winding sequences of 3 slots.

Figures 5 to 8 similarly illustrate star of plots for designs with q = 5/16, 6/19, 3/11 and 8/25.

Figure 9 illustrates a PM machine having three phases A, B and C and intermediate teeth between adjacent phases.

Figure 10 illustrates a flow chart over steps of a method in accordance with the invention.

**Detailed description of embodiments of the invention**

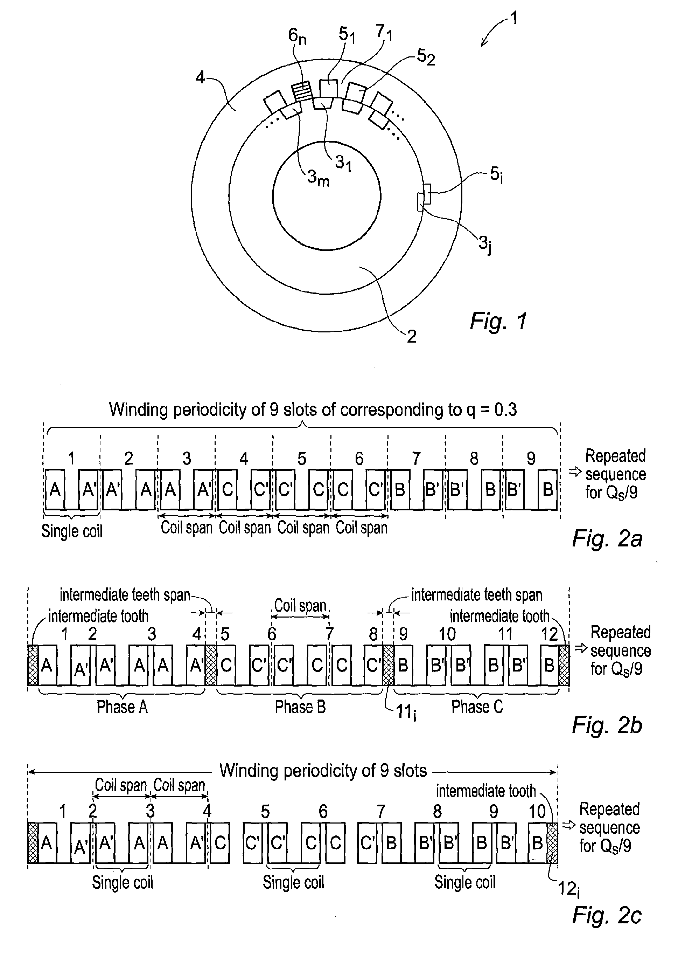

Figure 1 illustrates a permanent magnet (PM) motor 1 having a concentrated winding configuration. In particular, the PM motor 1 is shown in a cross-sectional view illustrating a stator 4 surrounding a rotor 2. The stator 4 comprises a stator core having a number of stator teeth $5_1$, $5_2$,..., $5_n$ arranged along its circumference, the stator teeth $5_1$, $5_2$,..., $5_n$ being separated by slots $7_1$, $7_2$,..., $7_n$. Each stator tooth $5_i$ has a coil $6_i$ wound around it, the coil $6_i$, or stator winding, comprising electrically conductive wire. The distance between two adjacent stator teeth 5 is denoted coil span or coil pitch.

A number of permanent magnets $3_1$, $3_2$,..., $3_m$ are arranged on the rotor 2, providing a number of magnetic poles. The permanent magnets 3 may be equally spaced about the rotor periphery and arranged on the rotor in any known and suitable manner, for example surface-mounted or inset-mounted. Alternatively, the permanent magnets may be arranged in so called irregular pole pitch designs, wherein the magnets are shifted in order to reduce cogging or torque ripples.

In general, the designer of the PM motor aims at obtaining as high winding factor as possible as described in the introductory part. A careful selection of number of slots and poles is required, and tables providing different slot-pole combinations giving a certain winding factor are available to this end. Based on the chosen slot-pole combination, a certain winding layout, or winding sequence, and the corresponding winding factor is obtained. Specifically, the winding sequence is the placement of the conductors of each phase in the slots.

The invention provides a design tool for providing an optimal winding arrangement giving a maximized fundamental winding factor for a chosen slot-pole combination, which will be described in the following. Briefly, the invention provides an optimal coil span by having irregular stator slot pitches. Various possible irregular slot pitch configurations will be described in different embodiments of the invention.

Figures 2a-2c illustrate a design having the number of slots per pole per phase equal to 0.3. In the following, a three-phase PM machine is used as illustration, the number of phases thus being three. The number of slots per pole per phase is denoted q and for the three-phase PM machine the q can be given by

$$q = \left( \frac{Q_s / 3}{p} \right) = \frac{n}{d} \qquad (1)$$

where $Q_s$ is the number of stator slots, p is the number of poles and n and d represents the numerator and denominator, respectively, of the fraction. n and d can be expressed as

$$n = \left[ \frac{Q_s / 3}{GCD(Q_s / 3; p)} \right] \qquad (2)$$

$$d = \left[ \frac{p}{GCD(Q_s / 3; p)} \right] \qquad (3)$$

where GCD comprises the greatest common divisor.

Figure 2a illustrates a constant or regular slot pitch, wherein the stator slot pitch $(\theta_{TS})$ or coil span $(\theta_{coil})$ can simply be calculated by

$$\theta_{TS} = \theta_{coil} = \left( \frac{2\pi}{Q_s} \right) \qquad (4)$$

since the distance between two adjacent slots is identical throughout the entire geometry. For the particular design with q = 0.3, an optimal winding arrangement covering 9 slots can be derived for obtaining a high fundamental winding factor $k_{w1}$.

As is known within the art, the fundamental winding factor for a two-layer winding configuration can be calculated by

$$k_{w1} = \left(\frac{3}{2Q_s}\right)\left|\sum_{i=1}^{2Q_s/3}\vec{E}_i\right| \qquad (5)$$

where $E_i$ is a voltage phasor element for a particular phase.

The inventive concept of having irregular slot pitch can be illustrated by introducing additional stator teeth, having no coils wound around them, between certain coils for the same geometry. One possible design approach, as illustrated in figure 2b, is to place an additional or intermediate tooth, illustrated at reference numeral $11_i$, between each of the three phases. The total number of additional stator teeth required corresponds to $Q_s/n$ where n can be determined by (2). As an example, for a 36-slot stator geometry, 12 additional stator teeth are required. It is noted that, as an additional advantage, this configuration offers a high fault tolerance, since the direct physical contacts between different phases are eliminated owing to the presence of the additional stator teeth.

Figure 2c illustrates another design approach, wherein these extra stator teeth are inserted only per winding periodicity, illustrated at reference numeral $12_i$. For example, a winding periodicity of 9 stator slots corresponds to a design with q equal to 0.3, which implies 4 additional stator teeth for the 36-slot stator and this in turn basically corresponds to a machine periodicity z that can be given by

$$z = GCD\left(\frac{p}{2}; Q_s\right) \qquad (6)$$

The additional intermediate teeth should be dimensioned appropriately so that the coil span/pitch is favourable for a further yet increased fundamental winding factor. This implies that an optimum design ratio k of the intermediate tooth span $\theta_{inter}$ over the coil span $\theta_{coil}$ can also be derived to achieve a theoretical unit winding factor for an appropriate slot-pole combination.

In the following, the correlation between slot-pole combination and the design ratio k will be derived and explained for the unity winding factor theory by using the irregular slot pitch concept.

For a design having intermediate stator teeth between adjacent coils with different phases (as illustrated in figure 2b), the coil pitch $\theta_{coil}$ in mechanical radians can be calculated by

$$\theta_{coil} = \left[\frac{2\pi - \left(\dfrac{Q_s}{n}\right)\theta_{inter}}{Q_s}\right] \qquad (7)$$

where, to reiterate, n is the numerator from the fractional number of q and can be determined by equation (2). Equation (7) can further be expressed as

$$\theta_{coil} = \left[\frac{2\pi - \left(\dfrac{Q_s}{n}\right)k\theta_{coil}}{Q_s}\right] \qquad (8)$$

and furthermore, the coil span in electrical radians can then be expressed as

$$\theta_{coil} = \left[ \frac{2\pi}{Q_s \left(1 + \frac{k}{n}\right)} \right] \left(\frac{p}{2}\right) \qquad (9)$$

In theory, a unity winding factor can be achieved when all the voltage phasor elements $E_i$ are aligned in the same direction, i.e. zero degree displacement between these elements. For PM machines with concentrated winding topology, this implies a phase coil span $\theta^e_{coil}$ of $\pi$ electrical radians to align all the phasor elements in the same direction. Therefore, the following interesting correlation between the number of slots and poles can be established

$$\theta^e_{coil} = \pi = \left[ \frac{2\pi}{Q_s \left(1 + \frac{k}{n}\right)} \right] \left(\frac{p}{2}\right), \qquad \Rightarrow p = Q_s \left(1 + \frac{k}{n}\right) \qquad (10)$$

Using the same approach, a similar correlation can be derived for the design having intermediate teeth per winding periodicity (as illustrated in figure 2c)

$$p = Q_s \left[ 1 + \left(\frac{k}{3n}\right) \right] \qquad (11)$$

It can be noted from equations (10) and (11), that the pole number p has to be greater than the slot number $Q_s$ irrespective of design ratio k. This can be viewed as a primary design guideline for selecting a slot-pole combination for complying with the theory as presented herein. Or stated differently, a design in accordance with the invention has to have the number of slots per pole per phase q less than 1/3 as the $p/Q_s$ ratio is greater than 1, for the illustrated three-phase PM motor. In order to find the corresponding design ratio k for any design that satisfies the above-mentioned constraints, the design ratio k can be obtained in accordance with:

1) For designs with intermediate teeth between adjacent phases (figure 2b), the design ratio k can be found by combining equations (10) and (1)-(3)

$$p = Q_s \left( (1 + \frac{k}{n}) \right)$$

$$\Rightarrow \left( \frac{p - Q_s}{Q_s} \right) = \frac{k}{n} = \frac{k}{\left( \frac{Q_s / 3}{GCD(Q_s / 3; p)} \right)} \qquad (12)$$

and hence

$$k = \frac{1}{3}\left(\frac{p}{GCD(Q_s/3;p)}\right) - \left(\frac{Q_s/3}{GCD(Q_s/3;p)}\right)$$

$$\Rightarrow k = \left(\frac{d}{3} - n\right) \qquad (13)$$

2) For design utilizing intermediated teeth per winding periodicity, the design ratio k can be found using the same approach as

$$p = Q_s\left(1 + \frac{k}{3n}\right)$$

$$\Rightarrow \left(\frac{p - Q_s}{Q_s}\right) = \frac{k}{3n} = \frac{k}{\left(\frac{Q_s}{GCD(Q_s/3;p)}\right)} \qquad (14)$$

and hence

$$k = \left(\frac{p}{GCD(Q_s/3;p)}\right) - \left(\frac{Q_s}{GCD(Q_s/3;p)}\right)$$

$$\Rightarrow k = (d - 3n) \qquad (15)$$

Equations (13) and (15) can thus be applied as a general rule of thumb for identifying the optimum design ratio k for the unity factor theory with the irregular slot pitch concept in accordance with the present invention. It is highly interesting to note that these equations further echo the design criteria of q being less than 1/3, as design ratio k is always greater than zero. This implies that n < d/3, which consequently verifies that q is less than 1/3 as q = n/d.

The verification of the above-described unity winding factor theory can be illustrated by utilizing the orientation of the voltage phasor elements based on the stator star of plots from a chosen design. The design should comply with the guidelines governed by equations (10) and (11), which state that p > $Q_s$, hence q < 1/3 or equivalently n < d/3 as design ratio k cannot be less than or equal to zero, as governed by equations (13) and (15).

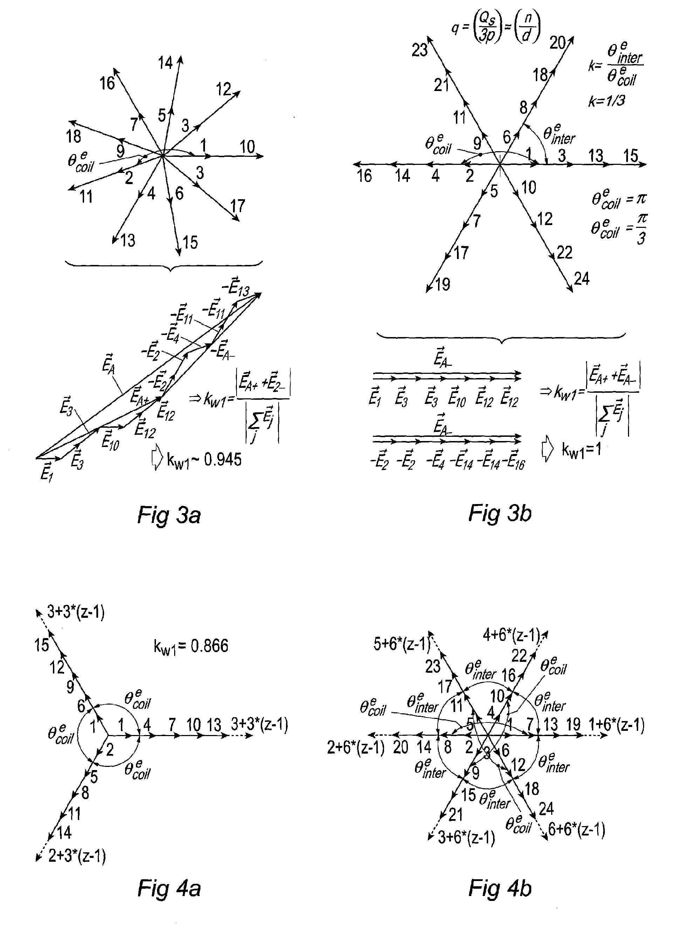

Figure 3b illustrates a star of plots for a design with q = 0.3, which satisfies all the above design guidelines, while figure 3a illustrates a constant slot-pitch design with q = 0.3 for comparison. As q = 0.3 or equivalently 3/10 (n=3, d=10), this gives a design ratio k of 1/3 for the irregular stator teeth concept with intermediate stator teeth between adjacent phases, or alternatively, a design ratio of 1 for an irregular stator teeth concept with intermediate teeth per winding periodicity.

The stator star of plots for the exemplary 18-20 slot-pole combination (i.e. q=0.3) shown in figures 3a and 3b, use equation (8), which then corresponds to a coil span $\theta_{coil}$ and an intermediate tooth span $\theta_{inter}$ of 18 and 6 mechanical degrees respectively. As illustrated in the figures, the fundamental winding factor $k_{w1}$ can be increased from 0.945 (figure 3a) to one (unity) (figure 3b) accordingly by aligning all the voltage phasor elements in the same direction (as shown in figure 3b) using a design constant k of 1/3 that can be easily found by equation (13). An increase in the fundamental winding factor implies a favourable boost in average output torque $T_{average}$ as the flux linkages to the stator windings are higher. The percentage increase in the output average torque can be approximated by $(1/k_{w11}-1)\%$, where $k_{w1}$ is the optimal achievable winding factor with a constant slot pitch. For instance, the average output torque or power can be increased by approximately 5.8% with a q = 0.3 design and a design constant k of 1/3 is applied along with the irregular slot pitch concept having intermediate stator teeth between adjacent phases.

The great advantages obtained by the present invention will further be illustrated by exemplary designs having q equal to 1/4, 5/16, 6/19, 8/25 and 3/11 respectively. When applying the equations (13) and (15), the following design ratios k can be found and derived accordingly:

- q = 1/4 => n = 1, d = 4, hence: i) k = 1/3 for having intermediate stator teeth between adjacent phases; ii) k = 1 for having intermediate stator teeth per winding periodicity of 3 slots

- q = 5/16 => n = 5, d = 16, hence: i) k = 1/3 for having intermediate stator teeth between adjacent phases; ii) k = 1 for having intermediate stator teeth per winding periodicity of 15 slots

- q = 6/19 => n = 6, d = 19, hence: i) k = 1/3 for having intermediate stator teeth between adjacent phases; ii) k = 1 for having intermediate stator teeth per winding periodicity of 36 slots

- q = 3/11 => n = 3, d = 11, hence: i) k = 2/3 for having intermediate stator teeth between adjacent phases; ii) k = 2 for having intermediate stator teeth per winding periodicity of 18 slots

- q = 8/25 => n = 8, d = 25, hence: i) k = 1/3 for having intermediate stator teeth between adjacent phases; ii) k = 1 for having intermediate stator teeth per winding periodicity of 15 slots.

The corresponding star of plots for these design examples are shown in figures 4-8, illustrating the influence of having intermediate stator teeth between adjacent phases.

Starting with figures 4a and 4b, the stator voltage phasor elements for designs with a q that is equal to 0.25 with an arbitrary number x of repeating winding sequences is shown. In particular, figure 4a illustrates a conventional constant slot-pitch design and figure 4b illustrates the inventive irregular slot pitch concept having intermediate teeth between adjacent phases. The winding sequence is 3 slots (BA'|AC'|CB'). As can be seen, with a deduced design ratio k of 1/3, the coil span and the intermediate tooth span arse $\pi$ and $\pi/3$ electrical radians respectively. Slots 1+6(x-1) and 2+6(x-1) can represent phase A' (A minus) and A (A plus), i.e. the same phase but with the current flowing in the opposite direction. Similarly, slots 3+6(x-1) and 4+6(x-1) can correspond to phase C' and C, while slots 5+6(x-1) and 6+6(x-1) can represent phase B' and B. the angular displacement between each phase is consequently $2\pi/3$ electrical radians owing to the additional stator teeth (intermediate stator teeth) designed between the adjacent phases. In the designs with q = 0.25, this implies that an intermediate stator tooth is put between all the main stator teeth. Since the coil span is $\pi$ electrical radians, this shows that the voltage phasor elements of the same phase are perfectly aligned, and hence a unity winding factor can be achieved.

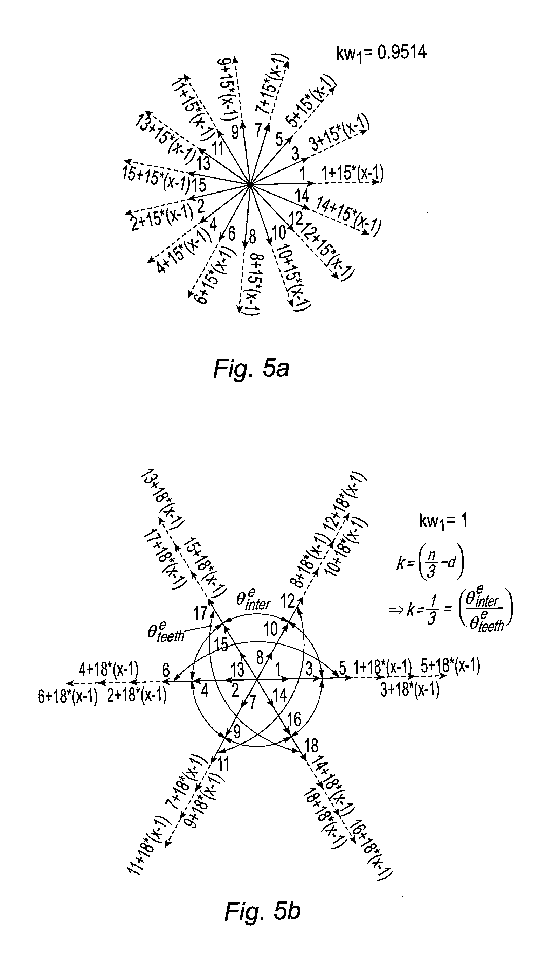

Figures 5 to 8 similarly illustrate the star of plots for designs with q = 5/16, 6/19, 3/11 and 8/25, respectively, with the design ratio k = 1/3, 1/3, 2/3 and 1/3 for inserting additional stator teeth between the adjacent phases. It can be noted that all the resultant star of plots become "hexagonal", as three phases are equally displaced by $2\pi/3$ electrical radians. Consequently, this implies that a unity winding factor is realized as the voltage elements of the same phase are aligned in the same direction.

Figures 5a, 5b thus illustrate star of plots showing stator voltage phasor elements for designs with a q that is equal to 5/16 with x number of repeating winding sequences of 15 slots (BA'|AA|A'A'|AA|A'A'|AC'|CC|C'C'|CC|C'C'|CB'|BB|B'B'|BB|B'B'), figure 5a for a conventional constant slot-pitch design and figure 5b for the irregular slot-pitch concept having intermediate teeth between adjacent phases.

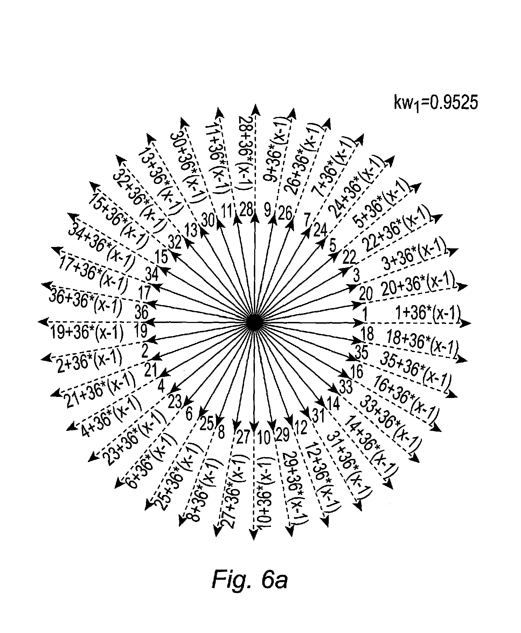

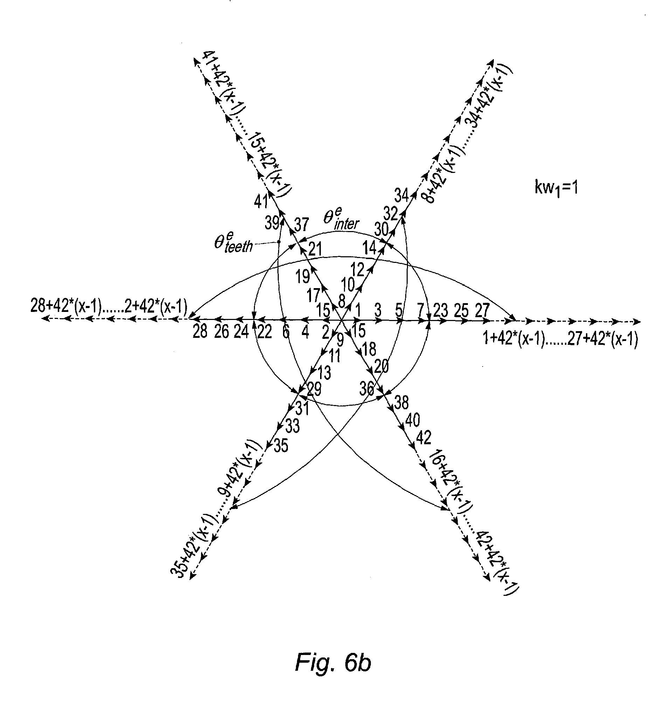

Figures 6a, 6b illustrate star of plots showing stator voltage element phasors for designs with a q that is equal to 6/19 with x number of repeating winding sequences of 36 slots (|BA'|AA|A'A'|AA|A'A'|AA|A'C|C'C'|CC|C'C'|CC|C'C'|CB'|BB|B'B'|B B|B'B'|BB|B'A|A'A'|AA|A'A'|AA|A'A'|AC'|CC|C'C'|CC|C'C'|CC|C'B| B'B'|BBIB'B'|BB|B'B'), Figure 6a for a conventional constant slot-pitch design and figure 6b for the irregular slot-pitch concept having intermediate teeth between adjacent phases.

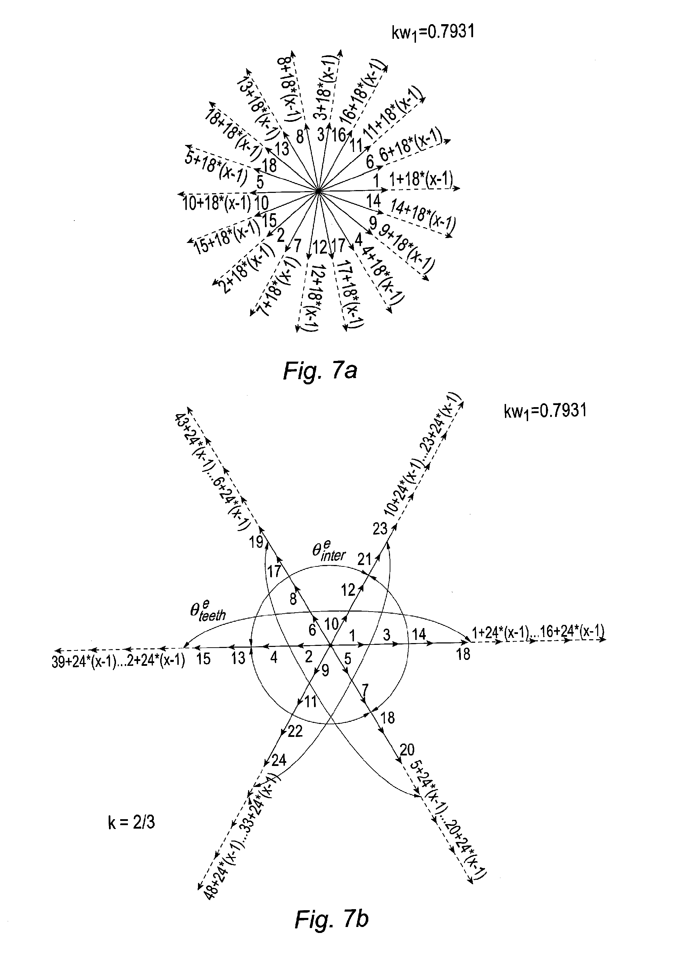

Figures 7a, 7b illustrate star of plots showing stator voltage element phasors for designs with a q that is equal to 3/11 with x number of repeating winding sequences of 18 slots (C'A'|AA|A'A'|AB|B'B'|BB|B'C'|CC|C'C'|CA|A'A'|AA|A'B'|BB|B'B'| BC|C'C'|CC|C'A'), figure 7a for a conventional constant slot-pitch design and figure 7b for the irregular slot-pitch concept having intermediate teeth between adjacent phases and design ratio k = 2/3.

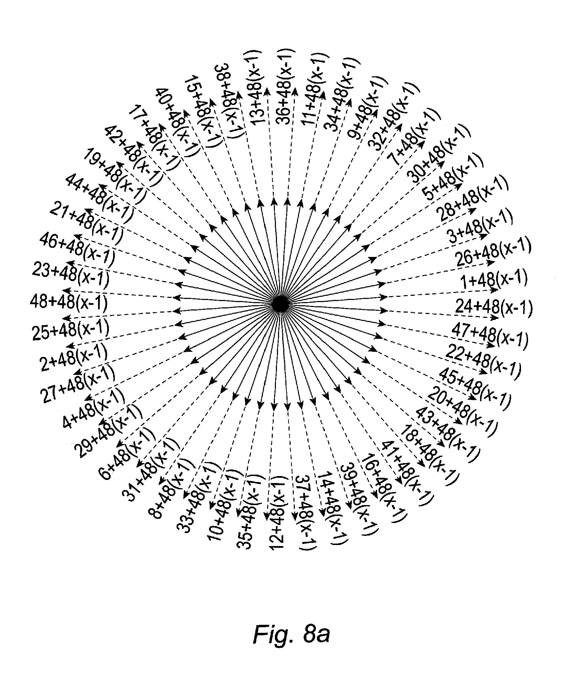

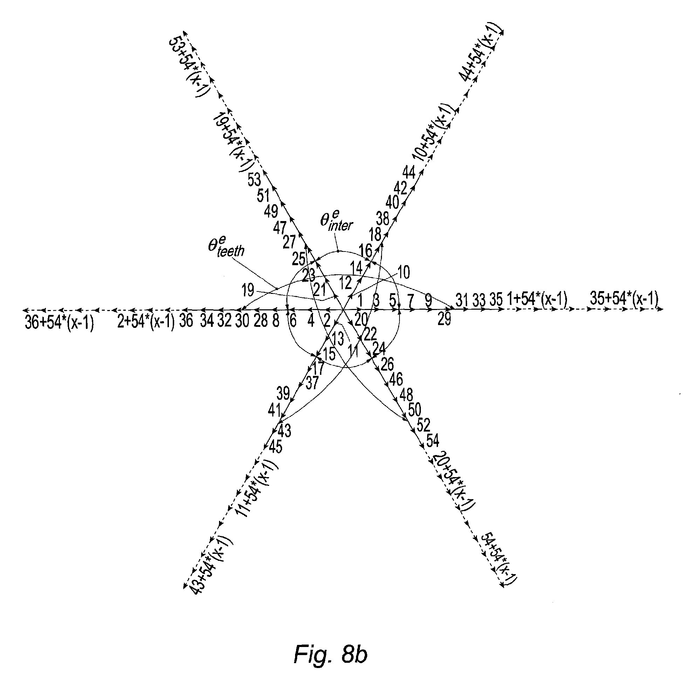

Figures 8a, 8b thus illustrate star of plots showing stator voltage element phasors for designs with a q that is equal to 8/25 with x number of repeating winding sequences of 48 slots (A'A|AA'|A'A|AA'|A'A|AA'|A'A|AA'|CC'|C'C|CC'|C'C|CC'|C'C|CC'|C 'C|B'B|BB'|B'B|BB'|B'B|BB'|B'B|BB'|AA'|A'A|AA'|A'A|AA'|A'A|AA' |A'A|C'C|CC'|C'C|CC'|C'C|CC'|C'C|CC'|BB'|B'B|BB'|B'B|BB'|B'B|B B'|B'B), figure 8a for a conventional constant slot-pitch design and figure 8b for the irregular slot-pitch concept having intermediate teeth between adjacent phases and design ratio k = 1/3.

With a similar approach, the resultant star of plots when employing intermediate stator teeth only per winding periodicity can also be deduced. With this arrangement, the total number of additional stator teeth is reduced to 1/3 of the number required when having additional stator teeth between every adjacent phase, and this implies that the intermediate stator teeth span is 3 times wider as the optimal coil span of $\pi$ electrical radians is always required. This can also be noticed by equations (13) and (15) as a factor of 3 is always preserved between derived design ratios of the two designs.

It is noted that the length of the inserted additional, coil-free intermediate teeth can be suitably dimensioned and need not correspond to the size of the regular stator teeth. Further, the number of intermediate teeth does not need to correspond to the number of intermediate tooth spans. That is, there may be intermediate tooth spans that are free of additional teeth.

In yet another embodiment of the invention, the irregular slot design is obtained without adding any additional stator teeth, i.e. without actually putting in additional stator teeth. That is, the regular stator teeth are placed in accordance with the above-described disclosure, but instead of the additional stator teeth as described above, only empty, irregular intermediate space is provided. This embodiment provides less core losses in the stator 4, and obviously less consumption of material, which provides a PM motor 1 having a slightly lower weight and reduced material costs.

The embodiments having the additional stator teeth are more mechanically stable and have a performance that is higher for most cases than the above-mentioned embodiment without additional stator teeth. Further, a higher overall inductance is provided owing to a higher phase leakage inductance in combination with a negligible mutual inductance between phases. Besides the already mentioned benefit of being more fault tolerant in that physical contact between different phases is avoided by the insertion of additional stator teeth, the short circuit current can also be considerably reduced.

The invention has been described with reference to figures of a permanent magnet motor having a double layer configuration. However, as a double layer configuration can be conceptually translated into a single layer configuration, and vice versa, it is realized that the invention is applicable also to such single layer configurations.

It is to be noted that although the equations have been described in connection with a three-phase PM motor, the findings can be generalized to an 1-phase PM motor, i.e. a PM motor having 1 phases.

It is further to be noted that although the invention has been described and illustrated by means of a permanent magnet motor, the invention is equally applicable to permanent magnet generators.

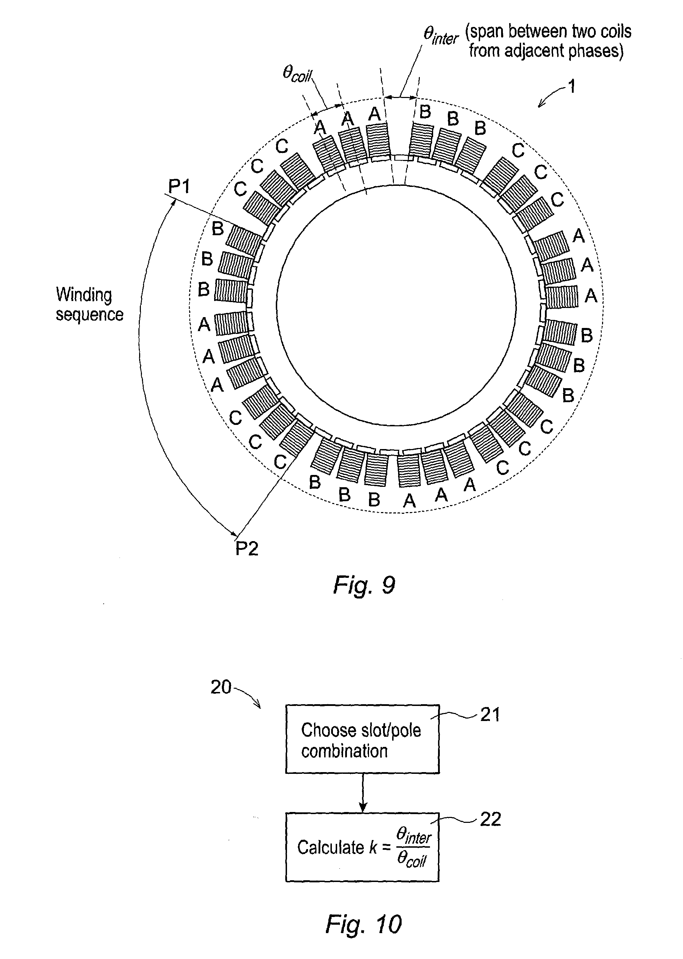

The expression "consecutive winding sequences" is to be understood as two successive sequences of windings for the 1 phases of the PM motor, i.e. the winding sequence for the 1 phases that is repeated. An equivalent expression would be "periodicity of winding sequence" or "repeating winding sequence". The expression "span between two adjacent phases" is to be understood as the span between two adjacent different phases. As an additional clarification of these expressions, figure 9 shows a PM machine 1 having three phases A, B and C. Additional teeth are arranged between adjacent phases, as illustrated by the ellipses drawn by dashed lines. A sequence of the three phases, i.e. winding sequence, is illustrated at the left of the figure between points P1 and P2.

Figure 10 summarizes the steps of a method in accordance with the invention. The method 20 provides an optimized winding factor $k_{w1}$ by optimizing coil span $\theta_{coil}$ and intermediate tooth span $\theta_{inter}$ so as to provide the optimized winding factor of an 1-phase permanent magnet machine 1 having concentrated windings. The permanent magnet machine 1, may for example comprise a three-phase PM motor as described above, comprising a stator 4 having a plurality of stator teeth $5_1, 5_2,..., 5_n$ separated by a plurality of stator slots $7_1, 7_2,..., 7_n$. The permanent magnet machine 1 further comprises a rotor 2 provided with a plurality of permanent magnets $3_1, 3_2,..., 3_m$ constituting magnetic poles. The method 20 comprises the first step of choosing 21 a slot/pole combination for the permanent magnet machine 1, providing a number of slots $Q_s$ per pole p per phase 1. This step 21 can be done in any suitable manner, for example based on parameters involved in the application at hand, such as restricting dimensions. The use of conventional tables over slot-pole combinations may also be conceivable, although the invention provides improved winding factors compared to known such tables.

In the next step, a ratio k of an intermediate tooth span $\theta_{inter}$ over a coil span $\theta_{coil}$ is calculated 22, based on the number of slots $Q_s$ per pole p per phase 1, as chosen in the preceding step. The coil span $\theta_{coil}$ comprises a coil span between coils of each respective phase, and the intermediate tooth span $\theta_{inter}$ comprises a span between coils of two adjacent phases or between two consecutive winding sequences, wherein intermediate tooth span $\theta_{inter}$ differs from the coil span $\theta_{coil}$. By means of the invention, the coil span is optimized so as to provide an optimized winding factor $k_{w1}$.

In an embodiment of the invention, the step 21 of choosing a slot/pole combination further comprises defining a fractional number n/d = q, where $n = \left\lceil \dfrac{Q_s/3}{GCD(Q_s/3;p)} \right\rceil$ and $d = \left\lceil \dfrac{p}{GCD(Q_s/3;p)} \right\rceil$, $Q_s$ is the number

of stator slots and p is the number of poles.

In another embodiment of the invention, the intermediate tooth span $\theta_{inter}$ comprises a span between two adjacent phases and wherein the step of calculating the ratio k comprises utilizing the equation:

$$k = \left( \frac{d}{3} - n \right).$$

In still another embodiment of the invention, the intermediate tooth span $\theta_{inter}$ comprises a span between two consecutive winding sequences and the step of calculating the ratio k comprises utilizing the equation:

$$k = (d - 3n).$$

In yet another embodiment of the invention, the number of stator slots $Q_s$ per pole p per phase 1 is less than 1/1, and in particular if the permanent magnet machine comprises a three-phase machine, the number of stator slots $Q_s$ per pole p per phase 1 is less than 1/3.

In summary, for a specific chosen slot-pole combination, for example as provided in a table over slot-pole combinations, the invention provides a huge advantage in that the average output torque can be increased for the same given dimensions or volume of the permanent magnet machine. This is intriguingly desirable, especially for high torque density PM motors. As a particular example, the increase of the winding factor from 0.93 to 1, which is easily obtained by means of the invention, provides a torque increase of approximately 7,5 %, which is a considerable improvement for the same given volume.

The above method for obtaining an optimal coil span so as to provide an optimized winding factor provides voltage phasor elements of the same phase being aligned in the same directions. This is in accordance with the invention realized by utilizing a stator geometry with an irregular slot pitch. The irregular slot pitch geometry can in turn be achieved, for example, by introducing an additional tooth (or intermediate tooth) between adjacent phases or per winding periodicity.

By means of the invention, a design ratio k is introduced and defined as the ratio of the intermediate teeth span $\theta_{inter}$ over the coil span $\theta_{coil}$. The ratio k can be calculated directly by the numerator n and denominator d of the fractional number q, i.e. q=n/d. For a topology having additional teeth between adjacent phases, k is related to n and d by k=d/3-n, while k is found by k = d-3n for the topology having extra teeth per winding periodicity. These two governing equations can be used globally to obtain a desirable unity fundamental winding factor design for a specific slot-pole combination that has q that is less than 1/3 (for a three-phase machine).

**Claims**

1. A method (20) for providing an improved winding factor ($k_{w1}$) of a 1-phase permanent magnet machine (1) having concentrated windings, said permanent magnet machine (1) comprising a stator (4) having a plurality of stator teeth ($5_1$, $5_2$,..., $5_n$) separated by a plurality of stator slots ($7_1$, $7_2$,..., $7_n$), said permanent magnet machine (1) further comprising a rotor (2) provided with a plurality of permanent magnets ($3_1$, $3_2$,..., $3_m$) constituting magnetic poles, **characterized by** the steps of:

   - choosing (21) a slot/pole combination for said permanent magnet machine (1), providing a number of slots ($Q_s$) per pole (p) per phase (1),
   - calculating (22) a ratio (k) of an intermediate tooth span $\theta_{inter}$ over a coil span $\theta_{coil}$ based on said number of slots ($Q_s$) per pole (p) per phase (1), where said coil span $\theta_{coil}$ comprises a coil span between coils of each respective phase, and said intermediate tooth span $\theta_{inter}$ comprises a span between coils of two adjacent phases or between two consecutive winding sequences differing from said coil span $\theta_{coil}$, whereby an improved winding factor ($k_{w1}$) is provided.

**2.** The method (20) as claimed in claim 1, wherein said permanent magnet machine (1) comprises a three-phase machine.

**3.** The method (20) as claimed in claim 2, wherein said step of choosing (21) a slot/pole combination further comprises defining a fractional number n/d = q, where $n = \left[ \dfrac{Q_s/3}{GCD(Q_s/3; p)} \right]$ and $d = \left[ \dfrac{p}{GCD(Q_s/3; p)} \right]$, $Q_s$ is the number of stator slots and p is the number of poles.

**4.** The method (20) as claimed in claim 3, wherein said intermediate tooth span $\theta_{inter}$ comprises a span between two adjacent phases and wherein said step of calculating (22) said ratio (k) comprises utilizing the equation:

$$k = \left( \frac{d}{3} - n \right).$$

**5.** The method (20) as claimed in claim 3, wherein said intermediate tooth span $\theta_{inter}$ comprises a span between two consecutive winding sequences and said step of calculating (22) said ratio (k) comprises utilizing the equation:

$$k = (d - 3n).$$

**6.** The method (20) as claimed in any of the preceding claims, wherein said number (q) of stator slots ($Q_s$) per pole (p) per phase (1) is less than 1/1.

**7.** A permanent magnet machine (1) with concentrated windings comprising a stator (4) having a plurality of stator teeth ($5_1, 5_2,..., 5_n$) separated by a plurality of stator slots ($7_1, 7_2,..., 7_n$), said stator teeth ($5_1, 5_2,..., 5_n$) being provided with electrical conductor windings/coil, said permanent magnet machine (1) further comprising a rotor (2) provided with a plurality of permanent magnets ($3_1, 3_2,..., 3_m$), **characterized in that** said stator teeth ($5_1, 5_2,..., 5_n$) and said stator slots ($7_1, 7_2,..., 7_n$) are arranged in a pattern providing said stator (4) with differing spans $\theta_{inter}$, $\theta_{coil}$, based on a ratio (k) of an intermediate tooth span $\theta_{inter}$ over a coil span $\theta_{coil}$ in turn based on a number (q) of stator slots ($Q_s$) per pole (p) per phase (1), where said coil span $\theta_{coil}$ comprises a coil span between coils of each respective phase, and said intermediate tooth span $\theta_{inter}$ comprises a span between two adjacent phases or between two consecutive winding sequences differing from said coil span $\theta_{coil}$, whereby an optimized winding factor ($k_{w1}$) is provided.

**8.** The permanent magnet machine (1) as claimed in claim 7, comprising additional stator teeth ($11_i$) between two adjacent phases.

**9.** The permanent magnet machine (1) as claimed in claim 7, comprising additional stator teeth ($12_i$) between two consecutive winding sequences.

**10.** The permanent magnet machine (1) as claimed in claim 8 or 9, wherein said additional stator teeth ($11_i$, $12_i$) are free of windings.

**11.** The permanent magnet machine (1) as claimed in any of claims 7-10, wherein said permanent magnet machine (1) comprises a motor or a generator.

**12.** The permanent magnet machine (1) as claimed in any of claims 7-11, wherein intermediate space equal to said intermediate teeth span $\theta_{inter}$ is provided between two consecutive winding sequences or between two adjacent phases.

**13.** The permanent magnet machine (1) as claimed in any of claims 7-12, wherein intermediate space equal to said

intermediate teeth span $\theta_{inter}$ is provided between each of two consecutive winding sequences or between each of two adjacent phases.

Fig. 1

Winding periodicity of 9 slots of corresponding to q = 0.3

Single coil    Coil span  Coil span  Coil span  Coil span

Repeated
⇒ sequence
for $Q_s/9$

Fig. 2a

intermediate teeth span
intermediate tooth          Coil span          intermediate teeth span
                                                intermediate tooth

Phase A          Phase B          Phase C

Repeated
⇒ sequence
for $Q_s/9$

Fig. 2b

Winding periodicity of 9 slots

Coil span  Coil span                            intermediate tooth

Single coil          Single coil          Single coil

Repeated
⇒ sequence
for $Q_s/9$

Fig. 2c

*Fig 3a*

*Fig 3b*

*Fig 4a*

*Fig 4b*

$kw_1 = 0.9514$

Fig. 5a

$kw_1 = 1$

$$k = \left(\frac{n}{3} - d\right)$$

$$\Rightarrow k = \frac{1}{3} = \left(\frac{\theta_{inter}^e}{\theta_{teeth}^e}\right)$$

Fig. 5b

Fig. 6a

Fig. 6b

kw₁=0.7931

Fig. 7a

kw₁=0.7931

k = 2/3

Fig. 7b

Fig. 8a

*Fig. 8b*

*θ_inter* (span between two coils from adjacent phases)

*θ_coil*

Winding sequence

P1

P2

*Fig. 9*

20

Choose slot/pole combination — 21

Calculate $k = \dfrac{\theta_{inter}}{\theta_{coil}}$ — 22

*Fig. 10*

Europäisches
Patentamt

European
Patent Office

Office européen
des brevets

## PARTIAL EUROPEAN SEARCH REPORT

which under Rule 63 of the European Patent Convention
shall be considered, for the purposes of subsequent
proceedings, as the European search report

**Application Number**

EP 09 15 3981

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/058871 A (SIEMENS AG [DE]; VOLLMER ROLF [DE]; SCHUNK HOLGER [DE]; BOTT ERICH [DE]) 8 June 2006 (2006-06-08) * the whole document * ----- | 1-13 | INV. H02K3/28 |
| X | FRIEDRICH J]RGEN K-H: "Bauformen und Betriebsverhalten modularer Dauermagnetmaschinen" DISSERTATION VON DER FAKULTAET FUER ELEKTROTECHNIK DERUNIVERSITAET DER BUNDESWEHR MUENCHEN, XX, XX, 1 January 1991 (1991-01-01), pages 1-41, XP002387835 * the whole document * ----- -/-- | 1-13 | |

|  |  |  | TECHNICAL FIELDS SEARCHED (IPC) |
|---|---|---|---|
|  |  |  | H02K |

### INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| Munich | 24 September 2009 | von Rauch, Marianne |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04E07)

Europäisches Patentamt

European Patent Office

Office européen des brevets

## PARTIAL EUROPEAN SEARCH REPORT

Application Number

EP 09 15 3981

| | DOCUMENTS CONSIDERED TO BE RELEVANT | | CLASSIFICATION OF THE APPLICATION (IPC) |
|---|---|---|---|
| Category | Citation of document with indication, where appropriate, of relevant passages | Relevant to claim | |
| X | KRASSER B: "Optimierte Auslegung einer Modularen Dauermagnetmaschine für ein autarkes Hybridfahrzeug, Kapitel 2" DISSERTATION FAKULTAET FUER ELEKTROTECHNIK UNDINFORMATIONSTECHNIK DER TECHNISCHEN UNIVERSITAET MUENCHEN ZURERLANGUNG DES AKADEMISCHEN GRADES EINES DOKTOR-INGENIEURS, XX, XX, 20 September 2000 (2000-09-20), pages 1-16, XP002355117 * the whole document * ----- | 1-13 | |
| | | | **TECHNICAL FIELDS SEARCHED** (IPC) |

EPO FORM 1503 03.82 (P04C10)

Europäisches
Patentamt

European
Patent Office

Office européen
des brevets

**INCOMPLETE SEARCH**
**SHEET C**

Application Number

EP 09 15 3981

Claim(s) searched incompletely:
    1-13

Claim(s) not searched:
        -

Reason for the limitation of the search:

Present claims 1-13 relate to a method and an apparatus which has a given
a desired effect, namely "improving/optimizing the winding factor".
However, the description does not provide support and disclosure in the
sense of Article 84 EPC for such a method or apparatus having the said
effect (technical features to achieve this improvement) and there is a
big number of general knowledge of this kind available to the person
skilled in the art. This non-compliance with the substantive provisions
is to such an extent, that a meaningful search of the whole claimed
subject-matter of the claim could not be carried out (Rule 63 EPC and
Guidelines B-VIII, 3).

The search of claim 1-13 was consequently restricted to the specifically
disclosed method and apparatus features (being part of the desired
effect), namely:
An electric machine comprising:
- rotor with permanent magnets,
- stator with teeth/slots and one winding around one tooth (concentrated
winding),
- more rotor poles than stator slots and
- unwound teeth added between winding sectors or phases.

## ANNEX TO THE EUROPEAN SEARCH REPORT
## ON EUROPEAN PATENT APPLICATION NO.

EP 09 15 3981

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2009

| Patent document cited in search report | Publication date | Patent family member(s) | Publication date |
|---|---|---|---|
| WO 2006058871 A | 08-06-2006 | CN 101069337 A<br>DE 102004058046 A1<br>JP 2008522576 T | 07-11-2007<br>22-06-2006<br>26-06-2008 |

EPO FORM P0459

For more details about this annex : see Official Journal of the European Patent Office, No. 12/82